# EUROPÄISCHE PATENTSCHRIFT

(11) **EP 0 889 274 B1**
(45) Veröffentlichungstag und Bekanntmachung des Hinweises auf die Patenterteilung: **04.06.2003**
(21) Anmeldenummer: 98110965.5
(22) Anmeldetag: 16.06.1998
(51) Int. Cl.: F16L 37/00, F16L 37/36

(54) **Kupplung zum Verbinden vakuumisolierter Leitungsenden**
Connection for vacuum insulated conduit ends
Raccord pour la connexion de tuyaux calorifugés à vide

(30) Priorität: 30.06.1997 DE 19727652
(43) Veröffentlichungstag der Anmeldung: 07.01.1999
(73) Patentinhaber: Messer Griesheim GmbH, 65933 Frankfurt am Main (DE)
(72) Erfinder: Tocha, Klaus, 40764 Langenfeld (DE)

(56) Entgegenhaltungen:
- WO-A-92/14960
- DE-A- 4 041 337
- DE-A- 4 104 711
- DE-A- 4 339 676
- DE-C- 19 516 029
- US-A- 2 543 590
- US-A- 3 168 906
- US-A- 4 335 747

## Beschreibung

Die Erfindung betrifft eine Kupplung zum Verbinden vakuumisolierter Leitungsenden über eine Kupplungsdose und einen Kupplungsstecker, die zum Führen eines kryogenen Mediums vorgesehen sind und jeweils an den äußeren Leitungsenden Mittel aufweisen, die die Leitungsenden verschließen.

Es sind bereits Kupplungen für kryogene Medien bekannt, die bezüglich ihrer Verbindungsmechanik und ihrer Mittel zum Öffnen und Schließen der Leitungsenden in zwei Gruppen eingeteilt werden können:

Aus der DE 19516029 C1, DE 4041337 A1 und DE 4339676 A1 sind Kupplungen für kryogene Medien bekannt, die einen Kupplungsstecker und eine Kupplungsdose aufweisen. Der Kupplungsstecker wird in die Kupplungsdose eingesteckt, so daß sich die vakuumisolierten äußeren Kupplungsgehäuse überlappen und ein am Kupplungsstecker angeordnetes Verbindungselement mit einem an der Kupplungsdose vorgesehenen Gegenstück in Eingriff gebracht werden kann. Die Verbindung wird durch Verschrauben des Kupplungssteckers mit der Kupplungsdose hergestellt. Während des dabei ausgeführten Verschiebevorganges des Kupplungssteckers in die Kupplungsdose wird die Kupplung zuerst gegen Umgebungsmedium abgedichtet; dann werden die die Leitungsenden verschließenden Mittel geöffnet. Die ventilartigen Mittel sind bei dieser Ausbildung der Kupplung weit entfernt von der Trennebene innerhalb der Kupplungsdose in der Kupplungsebene angeordnet.

In der Trennebene liegen sich die äußeren Stirnseiten von Kupplungsstecker und Kupplungsdose unmittelbar gegenüber.

In der Kupplungsebene liegen sich die die Leitungsenden verschließenden Mittel unmittelbar gegenüber. Die Mittel können geöffnet oder geschlossen werden und kryogenes Medium kann bei geöffnetem Mittel vom Leitungsende des Kupplungssteckers zum Leitungsende der Kupplungsdose strömen.

Darüber hinaus ist es aus der DE 41 04 711 A1 und der US 4,335,747 A1 bekannt, die Abdichtung gegen Umgebungsmedium getrennt vom Öffnen/Schließen der Mittel unmittelbar benachbart der Trennebene über Kugelhähne vorzunehmen. Die Verbindung des Kupplungssteckers mit der Kupplungsdose erfolgt über mechanische Elemente in der Trennebene. Sie weisen ebenfalls weit entfernt von der Trennebene in der Kupplungsdose angeordnete ventilartige Mittel auf, deren Öffnung über das über die Trennebene hinaus und durch die geöffneten Kugelhähne hindurch mechanisch verschiebbare Leitungsende des Kupplungssteckers erfolgt. Das Leitungsende des Kupplungssteckers ist hierzu flexibel im Sinne eines Wellschlauches ausgebildet.

Die ventilartigen Mittel der bekannten Kupplungen sind weit entfernt von der Trennebene in der Kupplungsebene angeordnet. Die Wartung der Kupplungen, z. B. der Austausch der Dichtungen, erfordert einen hohen Montageaufwand und/oder ist nur durch Zerstörung von Teilen der Kupplung möglich. Sie führt zu langen Ausfallzeiten der Kupplungen. Die formschlüssige Einsteck-/Einschiebeverbindung der aus Edelstahl bestehenden Kupplungsgehäuse verlangt hohe Oberflächengüte und beim Wegfahren in verbundenem Zustand zu schweren Schäden an der Tankstelle und/oder dem Fahrzeug führen kann, auch wenn der Kupplungsstecker von der Kupplungsdose in der Trennebene gelöst ist und der Kupplungsstecker zur Kupplungsdose in der Kupplungsebene angeordnet ist. Hinzu kommt, daß bei der Betankung von Kryokraftstoffbehältern von Fahrzeugen eine Bedienung der Kupplung durch Nichtfachleute erfolgt, was eine einfache und sichere Ausbildung der Kupplung erfordert, damit die Bediener nicht mit dem tiefkalten Kryokraftstoff in Verbindung kommen.

Die aus US 2,543,590 bekannte, als nächstliegender Stand der Technik zu bewertende Kupplung weist unmittetbar benachbart zur Trennebene der Kupplungsdose und des Kupplungssteckers angeordnete Mittel auf. Die die äußeren Leitungsenden von Kupplungsstecker/-dose verschließenden Mittel können aber nicht gleichgerichtet geöffnet werden, wodurch keine optimale Kupplungsausbildung möglich ist.

Es wären daher Kupplungen für kryogene Medien wünschenswert, bei denen die aus dem Stand der Technik bekannten Nachteile vermieden werden.

Der Erfindung liegt die Aufgabe zugrunde, eine Kupplung für kryogene Medien zu schaffen, die einfach gewartet werden kann und bei der die Sicherheit bei der Bedienung und bei Bedienfehlem gegenüber den bekannten Kupplungen verbessert ist.

Diese Aufgabe wird erfindungsgemäß bei einer Kupplung der eingangs genannten Art durch die Merkmale des Anspruchs 1 gelöst.

Durch den Aufbau der erfindungsgemäßen Kupplung findet die Verbindung der Leitungsenden von Kupplungsstecker und Kupplungsdose unmittelbar benachbart zur Trennebene statt, da alle Mittel zum Verschließen der beiden Leitungsenden unmittelbar benachbart zur Trennebene vorgesehen sind, so daß die Trennebene und die Kupplungsebene nahezu in einer gemeinsamen Ebene liegen. Die Handhabung der Kupplung wird hierdurch erleichtert, da Einsteck-/Einschiebevorgänge der aus Edelstahl gefertigten Kupplungsgehäuse entfallen. Die Sicherheit erhöht sich, weil im Fehlerfall keine Formschlußverbindung den Kupplungsstecker in der Kupplungsdose hält. Hinzu kommt, daß alle Dichtungen unmittelbar benachbart zur Trennebene lösbar angeordnet und damit direkt zugänglich sind. Ein Austausch fehlerhafter Dichtungen kann somit in einfacher Weise erfolgen, da die Dichtungen über die Leitungsenden zugänglich sind. Hierzu ist die Dichtung der Steuerstange in einer zur Kupplungsseite hin offenen Ausnehmung angeordnet und mit einem von außen lösbaren, nämlich verschraubten Zentrierelement abgedeckt. Die nahezu geradlinige Verschiebung der Steuerstange und des Schließkörpers wird durch das an der Stimseite der Steuerstange befestigte Zentrierelement erreicht, das in ein das Zentrierelement formschlüssig aufnehmendes Gegenstück am Schließkörper der Kupplungsdose eingreift. Über die formschlüssige Verbindung wird die axiale Führung der Steuerungsstange gewährleistet, die sich im geführten Schließkörper der Kupplungsdose zentriert.

Die die beiden Leitungsenden verschließenden Mittel haben eine gleichsinnige Öffnungsrichtung, so daß die Mittel mit nur einer axialen Steuerbewegung, die eine Steuerstange über die Trennebene hinaus ausführt, geöffnet werden können. Hierbei trägt die bei dem Kupplungsstecker vorgesehene Steuerstange eine Dichtung, welche mittels der Kraft eines Federelements oder eines Balgs gegen eine am Leitungsende ausgebildete Dichtfläche gezogen wird, während die von einem Schließkörper getragene Dichtung der Kupplungsdose mittels der Kraft eines Federelements oder eines Balgs gegen die am Leitungsende vorgesehene Dichtfläche gedrückt wird. Verschiebt sich die Steuerstange beispielsweise aufgrund einer ausfahrenden Steuereinheit axial zur Kupplungsdose, hebt die Dichtung der Steuerstange von der Dichtfläche ab; gleichzeitig entfernt die Steuerstange den Schließkörper entgegen der Kraft des Federelements oder die Federeigenschaften eines Balgs von dem Sitz, so daß die vom Schließkörper getragene Dichtung ebenfalls von der Dichtfläche abhebt und das kryogene Medium vom Kupplungsstecker zur Kupplungsdose strömen kann.

Die Abdichtung von Kupplungsstecker und Kupplungsdose in der Trennebene erfolgt über vorzugsweise zwei Kupplungsflächen, auf denen jeweils eine Dichtung angeordnet ist. Die eine äußere Dichtung dichtet das Kupplungsgehäuse gegen den Eintritt von Umgebungsmedium ab und verhindert eine Eisbildung, während die innere Dichtung die Mittel gegen den Austritt von kryogenem Medium abdichtet. Durch die im zusammengekuppelten Zustand eine abgedichtete Ringkammer bildenden Dichtungen wird eine direkte Verbindung des warmen Umgebungsmediums mit dem tiefkalten kryogene Medium ausgeschlossen.

Die ferngesteuerte Betätigung der erfindungsgemäßen Kupplung wird durch die direkte Freigabe des Strömungsweges des kryogene Mediums unabhängig von Einsteck-/Einschiebewegen über eine Steuereinheit erzielt. Die lösbare und im Notfall entriegelbare Verbindung von Kupplungsstecker und Kupplungsdose findet dabei in einem separaten Schritt vorher statt. Damit ist sichergestellt, daß der Bediener der Kupplung nicht mit dem kryogenen Medium in Verbindung kommt, da er an der Kupplung nur die Verbindung von Kupplungsstecker und Kupplungsdose herstellen muß und die Öffnung der Mittel entfernt von der Kupplung über ein Bedienelement erfolgt. Dabei kann die Öffnung der Mittel auch selbsttätig über eine vorgegebene Zeit erfolgen, z. B. durch Münz- oder Chipeinwurf oder durch Abtasten von Geldkarten.

Eine besonders einfach ausgebildete Steuereinheit weist einen Balg, vorzugsweise einen Metallbalg auf, dessen Innenraum mit einer Steuerleitung verbunden ist, welche mit ihrem anderen Ende an einen Druckgasraum angeschlossen ist. In der Steuerleitung ist ein femsteuerbares Ventil angeordnet, das über ein Steuersignal geöffnet oder geschlossen werden kann.

Nach einer anderen Ausführung ist die Steuereinheit als KolbenZylindereinheit ausgebildet.

Die Abmessungen der Kupplung können verringert und der mechanische Aufbau wesentlich vereinfacht werden, wenn die Steuereinheit in dem Leitungsende angeordnet ist, da Durchführungen und Verbindungen entfallen und die Mittel direkt mit der Steuereinheit verbunden werden können.

Das Kaltfahren der Kupplung bei geschlossenem Mittel wird durch zwei Leitungen möglich, die mit dem Leitungsende verbunden sind. Dabei dient die durchmesserkleinere Leitung als Fülleitung durch die das tiefkalte Medium in das Leitungsende strömt und das Leitungsende vorkühlt. Über die durchmessergrößere Leitung strömt das verdampfte Medium ab. Im Betrieb der Kupplung strömt das kryogene Medium durch beide Leitungen um möglichst große Massenströme und damit eine Füllzeitreduzierung bei geringem Druckverlust realisieren zu können.

Der Kupplungsstecker wird mit der Kupplungsdose über ein Verriegelungselement verbunden, das sich an dem Kupplungsstecker abstützt (Festlager) und die Kupplungsdose gegen die Kupplungsflächen mit den Dichtungen zieht. Hierzu weist die Kupplungsdose an ihrem Umfang einen Flansch auf, der von einem halbschalenförmigen Element des Verriegelungselements hintergriffen wird und über ein Gestänge zur Kupplungssteckerseite gezogen wird. Dabei legen sich die Dichtungen dichtend an die Kupplungsflächen von Kupplungsstecker und Kupplungsdose. Der bei geöffneten Mitteln im Leitungsende sich einstellende Strömungsdruck bewirkt darüber hinaus druckproportional Dichtkräfte an der kupplungssteckerseitigen Abdichtung. Vorteilhaft ist das Verriegelungselement so ausgebildet, daß es über eine Not-Entriegelung sofort, vorzugsweise sofort nach dem Schließvorgang, lösbar ist, so daß Kupplungsstecker und Kupplungsdose rasch frei beweglich sind. Eine Ausbildungsvariante der Not-Entriegelung kann in einer Reißleine bestehen, die den Umlegehebel des Verriegelungselementes öffnet und das Gestänge mit dem halbschalenförmigen Element freigibt, wenn eine entsprechende Zugkraft auf die Kupplung überschritten wird. Es ist selbstverständlich daß es eine Vielzahl weiterer mechanischer, pneumatischer, hydraulischer elektrischer oder magnetischer Ausführungsvarianten einer Not-Entriegelung gibt, die der Fachmann vorsehen kann, so daß die Erfindung nicht auf das Ausführungbeispiel beschränkt ist.

Ein Ausführungsbeispiel der Erfindung ist in der Zeichnung dargestellt und wird im folgenden näher beschrieben.

Es zeigen:
- Fig. 1: Einen Längsschnitt einer Kupplung, bei der die beiden Leitungsenden des Kupplungssteckers und der Kupplungsdose verschlossen sind;
- Fig. 2: Eine schematische Darstellung der mit dem Verriegelungselement zusammengekuppelten Kupplungsgehäuse;
- Fig. 3a: Einen schematischen Längsschnitt der in Figur 1 gezeigten Kupplung mit geöffnetem Strömungsweg;
- Fig. 3b: Einen schematischen Längsschnitt der in Figur 1 gezeigten Kupplung mit geschlossenem Strömungsweg;
- Fig. 3c: Einen schematischen Längsschnitt der in Figur 1 gezeigten Kupplung mit getrenntem Kupplungsstecker und Kupplungsdose.

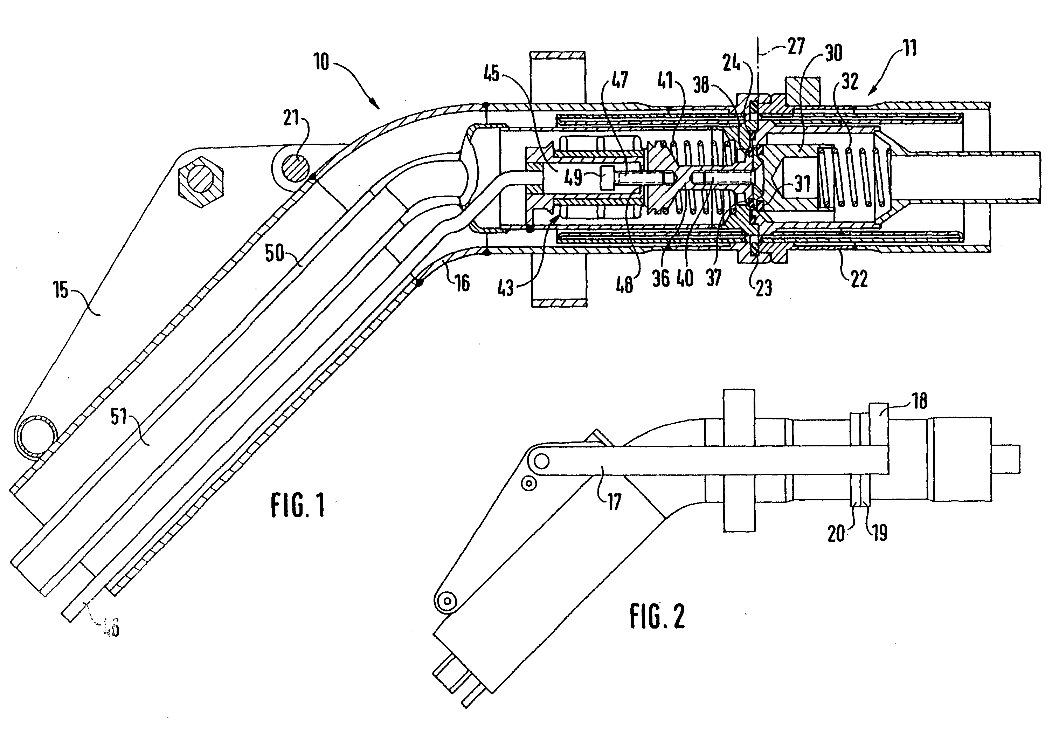

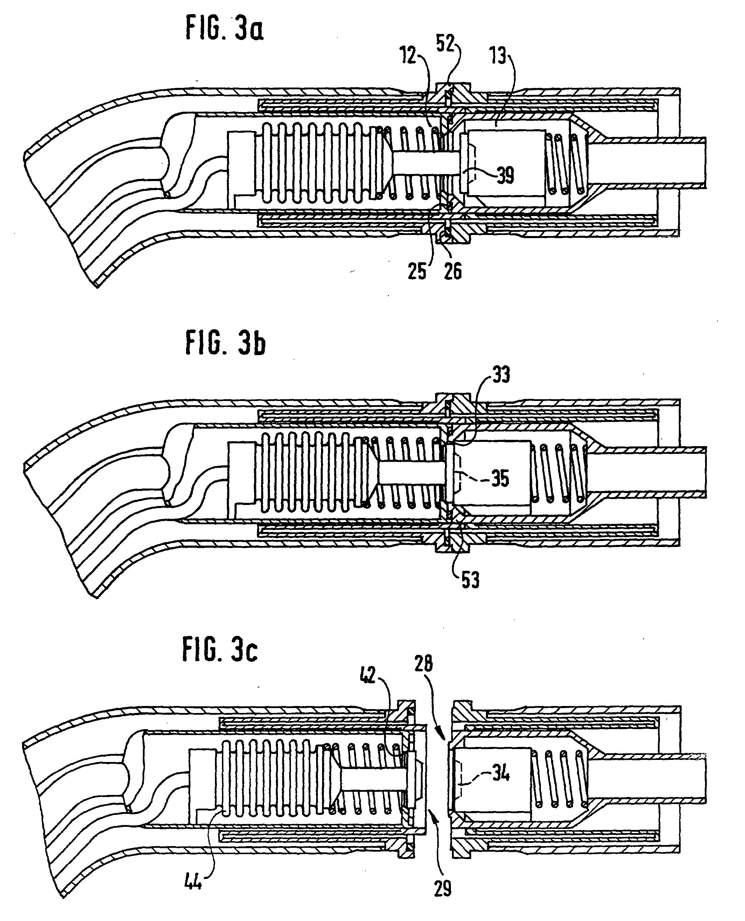

Die im Längsschnitt dargestellte Kupplung nach Figur 1 umfaßt einen Kupplungsstecker 10 und eine Kupplungsdose 11 zum Verbinden zweier Leitungsenden 12, 13 (Figur 3a). Die Verbindung des Kupplungssteckers 10 mit der Kupplungsdose 11 wird durch das Verriegelungselement hergestellt. Auf dem vakuumisolierten Kupplungsgehäuse 16 des Kupplungssteckers 10 ist hierzu ein Umlegehebel 15 vorgesehen, der um eine Achse 21 drehbar gelagert ist und an dem ein Gestänge 17 außerhalb der Drehachse 21 schwenkbar gelagert ist. An dem Gestänge ist ein halbschalenförmiges Element 18 befestigt, das einen Flansch 19 des vakuumisolierten Kupplungsgehäuses 22 der Kupplungsdose 11 umgreift und bei um die Achse 21 drehenden Umlegehebel-15 gegen einen Flansch 20 des Kupplungssteckers zieht. Über die Bewegung des Elements 18 wird die benötigte mechanische Kraft, die das Vakuumgehäuse 22 der Kupplungsdose 11 gegen die mit Dichtungen 23, 24 versehenen Kupplungsflächen 25, 26 des Kupplungssteckers 10 zieht, aufgebracht.

Jedes Kupplungsgehäuse 16, 22 bildet einen sich nahezu über die gesamte Länge von Kupplungsstecker 10 und Kupplungsdose 11 erstreckende, isolierende Vakuumkammer die ein Verdampfen beim Durchfluß von tiefkalten Medien in den Leitungsenden 12, 13 verhindern. Die Leitungsenden 12, 13 reichen bis zur Trennebene 27 von Kupplungsstecker 10 und Kupplungsdose 11. An jedem Leitungsende 12, 13 sind die sich gegenüberliegenden Mittel 28, 29 (Figur 3c) zum Öffnen und Schließen der Leitungsenden 12, 13 unmittelbar benachbart der Trennebene 27 angeordnet. Die Mittel 28 der Kupplungsdose 11 bestehen aus einem das Leitungsende 13 verschließenden Schließkörper 30, der eine Dichtung 31 aus PTFE trägt. Der Schließkörper 30 liegt über eine Feder 32 und Medium kraftbeaufschlagt an der Dichtfläche 33 (Figur 3b). Die Dichtfläche ist innerhalb des erweiterten Leitungsendes 13 angeordnet und in Form einer sich unter einem Winkel verjüngenden Wand des Leitungsendes 13 ausgebildet. Gegen die Dichtfläche 33 wird der Schließkörper 30 mit der Dichtung 31 von der Feder 32 gedrückt. Der Schließkörper 30 weist eine Ausnehmung 34 auf, die als Gegenstück zu einem Zentrierelement 35 des Kupplungssteckers 10 ausgebildet ist und dieses Zentrierelement 35 des Kupplungssteckers 10 formschlüssig aufnimmt.

Das Mittel 29 des Kupplungssteckers 10 zum Öffnen und Schließen des Leitungsendes 12 ist unmittelbar benachbart der Trennebene 27 angeordnet und besteht aus einer Steuerstange 36 die eine zur Kupplungsseite weisende offene Ausnehmung 37 aufweist, die eine Dichtung 38 aus PTFE trägt. Die Dichtung 38 wird von einem Flansch 39 des Zentrierelements 35 von oben abgedeckt. Das Zentrierelement 35 ist über Schraube 40 von der freien Seite des Leitungsendes 12 lösbar mit der Steuerstange 36 verbunden. Die Steuerstange 36 mit der Dichtung 38 wird über die Feder 41 gegen die Dichtfläche 42 gezogen. Die Dichtfläche 42 ist am erweiterten Leitungsende 12 vorgesehen. Die Steuerstange 36 ist mit einer als Balg 44 ausgebildeten Steuereinheit 43 verbunden. Die Steuereinheit weist einen Innenraum 45 auf, der über eine Steuerleitung 46 mit einem nicht näher dargestellten Druckraum verbunden ist. Das Steuerfluid des Innenraumes wird über nicht näher dargestellte Steuermittel über Steuerleitung 46 dem Innenraum 45 zugeführt.

Eine den Hub der Steuerstange 36 begrenzendes Element 47, beispielsweise eine Schraube, ist an der zum Innenraum 45 weisenden Seite der Steuerstange 36 eingeschraubt und ist durch eine mit dem Innenraum verbundene Anlagefläche 48 begrenzt, deren Durchtrittsöffnung für das Element 47 kleiner ist als dessen Kopf 49. Über die Einschraublänge wird der Ausfallhub der Steuerstange begrenzt. Dies verhindert eine Beschädigung des Balgs 44, wenn die Steuerstange in nicht gekuppeltem Zustand ausgefahren wird.

Das erweiterte Leitungsende 12 des Kupplungssteckers ist über zwei Leitungen 50, 51 mit einem nicht näher dargestellten Behälter verbunden, der das kryogene Medium enthält.

Wie die Figuren 3a bis 3b zeigen, werden die beiden Kupplungsgehäuse 16, 22 in der Trennebene 27 stimseitig gegeneinander gesetzt. An den Stirnseiten vorgesehene Zentrierringe 52, 53 dienen der Lageorientierung. Durch Herunterdrücken des Umlegehebels 15 und der kraftverstärkenden Mechanik werden der Kupplungsstecker 10 und die Kupplungsdose 11 fest gegeneinandergezogen und arretiert; die innere und äußere Dichtung 24 und 23 verformt sich. In dieser jetzt nach außen dichten Position ist keine Strömung des kryogenen Mediums möglich - auch das zwischen Kupplungsstecker 10 und Kupplungsdose 11 aufgrund des Formschlusses der Verbindungsflächen minimierte Totvolumen ist drucklos. Durch Aufschalten des Steuerdrucks wird der Innenraum 45 des Balgs 44 mit Druck beaufschlagt. Der Balg fährt die die Dichtung 38 haltende Steuerstange senkrecht zur Seite der Kupplungsdose über die Trennebene 27 hinaus aus. Dabei wird das Mittel 28 der Kupplungsdose gemeinsam mit dem Mittel 29 des Kupplungssteckers in Öffnungsstellung gebracht. Die beiden Leitungsenden 12, 13 sind jetzt miteinander verbunden und das kryogene Medium kann strömen. Nach Beendigung des Medienstromes wird der Innenraum 45 über die Steuerleitung 46 druckentlastet. Die Feder 41 schiebt die Steuerstange 36 mit dem Balg 44 in Schließstellung, bis die Dichtung 38 an der Dichtfläche 33 dichtend anliegt. Der Vorgang wird unterstützt durch die Drücke in beiden Leitungsenden 12, 13, da die wirksamen Balg- und Dichtungsflächen zusätzliche Schließkräfte hervorrufen.

Die Kupplung ist jetzt durch Betätigen des Umlegehebels trennbar.

## Patentansprüche

1. Kupplung zum Verbinden vakuumisolierter Leitungsenden (12, 13) Kupplungsdose (11) und mit einer einem Kupplungsstecker (10), an den Leitungsenden die zum Führen eines kryogenen Mediums vorgesehen sind und jeweils an den äußeren Leitungsenden (12, 13) Mittel (28, 29) aufweisen, die die Leitungsenden (12, 13) verschließen,
**dadurch gekennzeichnet, daß**
die Mittel (28,29) beider Leitungsenden (12, 13) unmittelbar benachbart zur Trennebene (27) von Kupplungsdose (11) und Kupplungsstecker (10) angeordnet sind, wobei das Mittel (29) eine Steuerstange (36) mit einer Dichtung (38) und ein mit der Steuerstange (36) über eine Schraube (40) lösbar verbundenes und am Schließkörper (30) der Kupplungsdose (11) eingreifendes Zentrierelement (35) aufweist, wobei die in einer zur Kupplungsseite hin offenen Ausnehmung (37) angeordnete und von einem Flansch (39) des Zentrierelements (35) abgedeckte Dichtung (38) mittels der Kraft einer Feder (41) an einer am Leitungsende (12) vorgesehenen Dichtfläche (42) anliegt.

2. Kupplung nach Anspruch 1,
**dadurch gekennzeichnet,**
**daß** das Mittel (28) eine Dichtung (31) zum Abdichten des Leitungsendes (12) aufweist und die Dichtung (31) unmittelbar benachbart zur Trennebene (27) angeordnet und lösbar ist.

3. Kupplung nach Anspruch 1,
**dadurch gekennzeichnet, daß** das zur Kupplungsseite gerichtete Leitungsende (12) mindestens eine ringförmige Kupplungsfläche (25, 26) aufweist und auf der Kupplungsfläche (25, 26) mindestens eine Dichtung (23, 24) lösbar angeordnet ist.

4. Kupplung nach Anspruch 3,
**dadurch gekennzeichnet, daß** eine äußere und eine innere Kupplungsfläche (25, 26) mit jeweils einer Dichtung (23, 24) vorgesehen ist und die äußere Dichtung (23) das Kupplungsgehäuse gegen den Eintritt von Umgebungsmedium und die innere Dichtung (24) die Mittel (28, 29) gegen den Austritt von kryogenem Medium abdichtet.

5. Kupplung nach einem der Ansprüche 1 bis 4,
**dadurch gekennzeichnet, daß** die Kupplungsdose (11) einen im Leitungsende angeordneten Schließkörper (30) aufweist, der eine Dichtung (31) trägt, die mittels der Kraft eines Federelements (32) an einer am Leitungsende vorgesehenen Dichtfläche (33) anliegt.

6. Kupplung nach einem der Ansprüche 1 bis 5,
**dadurch gekennzeichnet, daß** die Dichtung (31) mittels der Federkraft gegen die Dichtfläche (33) gedrückt wird.

7. Kupplung nach einem der Ansprüche 1 bis 6,
**dadurch gekennzeichnet, daß** der Schließkörper (30) eine das Zentrierelement (35) aufnehmende Ausbildung an der Stirnseite aufweist.

8. Kupplung nach einem der Ansprüche 1 bis 7,
**dadurch gekennzeichnet, daß** alle Dichtungen (23, 24, 31, 38) des Kupplungssteckers (10) und der Kupplungsdose (11) nahezu in einer Ebene liegen.

9. Kupplung nach einem der Ansprüche 1 bis 8,
**dadurch gekennzeichnet, daß** der Kupplungsstecker (10) eine mit dem Mittel (29) verbundene Steuereinheit (43) aufweist, die mit einem Steuerdruck beaufschlagt die Steuerstange (36) über die Trennebene (27) hinaus verschiebt und die Leitungsenden (12, 13) öffnet.

10. Kupplung nach Anspruch 9,
**dadurch gekennzeichnet, daß** die Steuereinheit (43) als Balg (44) vorzugsweise Metallbalg oder KolbenZylindereinheit ausgebildet ist, der einen Innenraum (45) aufweist, welcher mit einer Steuerleitung (46) verbunden ist.

11. Kupplung nach einem der Ansprüche 9 oder 10,
**dadurch gekennzeichnet, daß** die Steuereinheit (43) in dem Leitungsende (12) angeordnet ist.

12. Kupplung nach einem der Ansprüche 1 bis 11,
**dadurch gekennzeichnet, daß** das Leitungsende (12) mit zwei Leitungen (50, 51) für die Zu- und/oder Ableitung des kryogenen Mediums verbunden ist.

13. Kupplung nach einem der Ansprüche 1 bis 12,
**dadurch gekennzeichnet, daß** die Verbindung des Kupplungssteckers (10) mit der Kupplungsdose (11) über eine Verriegelungselement (14) erfolgt, das sich an dem Kupplungsstecker (10) abstützt und die Kupplungsdose (11) gegen die Kupplungsflächen (25, 26) zieht, wobei zwischen den Kupplungsflächen die Dichtungen (23, 24) dichtend anliegen.

14. Kupplung nach einem der Ansprüche 1-13 ,wobei der Kupplungstecker (10) als Teil einer Tankstellenzapfsäule und die Kupplungsdose (11) als Tankverschluß eines Fahrzeugs ausgebildet ist.

## Claims

1. Coupling for the connection of vacuum-insulated conduit ends (12, 13), with a coupling socket (11) and with a coupling plug (10) at the conduit ends which are provided for carrying a cryogenic medium and have in each case at the outer conduit ends (12, 13) means (28, 29) which close the conduit ends (12, 13), **characterized in that** the means (28, 29) of the two conduit ends (12, 13) are arranged so as to be directly adjacent to the parting plane (27) of the coupling socket (11) and the coupling plug (10), the means (29) having a control rod (36) with a seal (38) and having a centring element (35) releasably connected to the control rod (36) via a screw (40) and engaging on the closing body (30) of the coupling socket (11), the seal (38), which is arranged in a recess (37) open towards the coupling side and is covered by a flange (39) of the centring element (35), coming to bear by means of the force of a spring (41) on a sealing surface (42) provided at the conduit end (12).

2. Coupling according to Claim 1, **characterized in that** the means (28) has a seal (31) for sealing off the conduit end (12), and the seal (31) is arranged so as to be directly adjacent to the parting plane (27) and is releasable.

3. Coupling according to Claim 1, **characterized in that** the conduit end (12) directed towards the coupling side has at least one annular coupling surface (25, 26), and at least one seal (23, 24) is arranged releasably on the coupling surface (25, 26).

4. Coupling according to Claim 3, **characterized in that** an outer and an inner coupling surface (25, 26) is provided in each case with a seal (23, 24), and the outer seal (23) seals off the coupling housing against the ingress of surrounding medium and the inner seal (24) seals off the means (28, 29) against the ingress of cryogenic medium.

5. Coupling according to one of Claims 1 to 4, **characterized in that** the coupling socket (11) has a closing body (30) which is arranged in the conduit end and which carries a seal (31) coming to bear by means of the force of a spring element (32) on a sealing surface (33) provided at the conduit end.

6. Coupling according to one of Claims 1 to 5, **characterized in that** the seal (31) is pressed against the sealing surface (33) by means of the spring force.

7. Coupling according to one of Claims 1 to 6, **characterized in that** the closing body (30) has, on the end face, a design receiving the centring element (35).

8. Coupling according to one of Claims 1 to 7, **characterized in that** all the seals (23, 24, 31, 38) of the coupling plug (10) and of the coupling socket (11) lie virtually in one plane.

9. Coupling according to one of Claims 1 to 8, **characterized in that** the coupling plug (10) has a control unit (43) which is connected to the means (29) and which, acted upon by a control pressure, displaces the control rod (36) beyond the parting plane (27) and opens the conduit ends (12, 13).

10. Coupling according to Claim 9, **characterized in that** the control unit (43) is designed as a concertina (44), preferably a metal concertina or a piston/cylinder unit, which has an inner space (45) connected to a control conduit (46).

11. Coupling according to one of Claims 9 or 10, **characterized in that** the control unit (43) is arranged in the conduit end (12).

12. Coupling according to one of Claims 1 to 11, **characterized in that** the conduit end (12) is connected to two conduits (50, 51) for the delivery and/or discharge of the cryogenic medium.

13. Coupling according to one of Claims 1 to 12, **characterized in that** the coupling plug (10) is connected to the coupling socket (11) via a locking element (14) which is supported on the coupling plug (10) and which pulls the coupling socket (11) against the coupling surfaces (25, 26), the seals (23, 24) coming to bear sealingly between the coupling surfaces.

14. Coupling according to one of Claims 1 to 13, the coupling plug (10) being designed as part of a filling-station pump and the coupling socket (11) being designed as a tank cap on a vehicle.

## Revendications

1. Raccord destiné à raccorder des extrémités de conduites (12, 13) isolées à joint étanche au vide au moyen d'un demi raccord femelle (11) et d'un demi-raccord mâle (10), prévus pour le transport d'un milieu cryogénique et présentant chacun, aux extrémités extérieures des conduites (12, 13), des moyens (28, 29) qui obturent les extrémités des conduites (12, 13),
**caractérisé en ce que**
les moyens (28, 29) des deux extrémités de conduites (12, 13) sont disposés à proximité immédiate du plan de séparation (27) du demi-raccord femelle (11) et du demi-raccord mâle (10), le moyen (29) présentant une tige de commande (36) munie d'une garniture d'étanchéité (38) et un élément de centrage (35) relié à la tige de commande (36) de façon détachable au moyen d'une vis (40) et qui entre en prise avec le corps obturateur (30) du demi-raccord femelle (11), la garniture d'étanchéité (38) disposée dans un évidement (37) qui s'ouvre vers le côté de raccordement, et recouverte par une collerette (39) de l'élément de centrage (35), étant appuyée contre une surface d'étanchéité (42) prévue à l'extrémité de conduite (12) au moyen de la force d'un ressort (41).

2. Raccord selon la revendication 1,
**caractérisé en ce que**
le moyen (28) présente une garniture d'étanchéité (31) destinée à isoler à joint étanche l'extrémité de conduite (12) et la garniture d'étanchéité (31) est disposée à proximité immédiate du plan de séparation (27) et peut être détachée.

3. Raccord selon la revendication 1,
**caractérisé en ce que**
l'extrémité de conduite (12) dirigée vers le côté de raccordement présente au moins une surface de raccordement annulaire (25, 26) et au moins une garniture d'étanchéité (23, 24) est disposée de façon détachable sur la surface de raccordement (25, 26).

4. Raccord selon la revendication 3,
**caractérisé en ce que**
une surface de raccordement extérieure et une surface de raccordement intérieure (25, 26) sont munies chacune d'une garniture d'étanchéité (23, 24) et la garniture d'étanchéité extérieure (23) ferme hermétiquement le boîtier de raccord à l'encontre de l'entrée du milieu environnant et la garniture d'étanchéité intérieure (24) ferme hermétiquement les moyens (28, 29) à l'encontre de la sortie du milieu cryogénique.

5. Raccord selon une des revendications 1 à 4,
**caractérisé en ce que**
le demi-raccord femelle (11) présente un corps obturateur (30) disposé dans l'extrémité de conduite et qui porte une garniture d'étanchéité (31) qui est appuyée, au moyen de la force d'un élément élastique (32), contre une surface d'étanchéité (33) prévue à l'extrémité de conduite.

6. Raccord selon une des revendications 1 à 5,
**caractérisé en ce que**
la garniture d'étanchéité (31) est pressée contre la surface d'étanchéité (33) au moyen de la force du ressort.

7. Raccord selon une des revendications 1 à 6,
**caractérisé en ce que**
le corps obturateur (30) présente, au droit du côté frontal, une formation qui reçoit l'élément de centrage (35).

8. Raccord selon une des revendications 1 à 7,
**caractérisé en ce que**
toutes les garnitures d'étanchéité (23, 24, 31, 38) du demi-raccord mâle (10) et du demi-raccord femelle (11) se trouvent approximativement dans un même plan.

9. Raccord selon une des revendications 1 à 8,
**caractérisé en ce que**
le demi-raccord mâle (10) présente une unité de commande (43) reliée au moyen (29) et qui, sollicitée par une pression de commande, pousse la tige de commande (36) au-delà du plan de séparation (27) et ouvre les extrémités de conduites (12, 13).

10. Raccord selon la revendication 9,
**caractérisé en ce que**
l'unité de commande (43) est constituée par un soufflet (44), de préférence un soufflet métallique, ou par une unité piston/cylindre, qui présente une chambre intérieure (45) qui est reliée à une conduite de commande (46).

11. Raccord selon une des revendications 9 ou 10,
**caractérisé en ce que**
l'unité de commande (43) est disposée dans l'extrémité de conduite (12).

12. Raccord selon une des revendications 1 à 11,
**caractérisé en ce que**
l'extrémité de conduite (12) est reliée à deux conduites (50, 51) pour l'arrivée et/ou le départ du milieu cryogénique.

13. Raccord selon une des revendications 1 à 12,
**caractérisé en ce que**
l'assemblage du demi-raccord mâle (10) avec le demi-raccord femelle (11) s'effectue par l'intermédiaire d'un élément de verrouillage (14) qui prend appui contre le demi-raccord mâle (10) et attire le demi-raccord femelle (11) contre les surfaces de raccordement (25, 26), les garnitures d'étanchéité (23, 24) étant en appui à joint étanche entre les surfaces de raccordement.

14. Raccord selon une des revendications 1 à 13,
dans lequel
le demi-raccord mâle (10) constitue une partie d'une borne de stationservice, et dans lequel le demi-raccord femelle (11) constitue le bouchon du réservoir d'un véhicule.
